# EUROPEAN PATENT APPLICATION

(11) **EP 4 697 112 A1**
(43) Date of publication of application: **18.02.2026**
(21) Application number: 24788700.3
(22) Date of filing: 08.04.2024
(51) Int. Cl.: G05B 23/02, C02F 1/00, G05B 19/418

(54) **INFORMATION PROCESSING DEVICE, PROCESS DATA PROCESSING METHOD, AND PROGRAM**

(30) Priority: 13.04.2023 JP 2023065783
(71) Applicant: Daicel Corporation, Osaka-shi, Osaka 530-0011 (JP)
(72) Inventor: HAITSUKA, Masahiro, Tokyo 108-8230 (JP); KUMATA, Kenji, Tokyo 108-8230 (JP); NAKAI, Yoshito, Tokyo 108-8230 (JP); TAKETSUGU, Yuki, Tokyo 108-8230 (JP); KOMINE, Yusuke, Tokyo 108-8230 (JP)
(74) Representative: Grünecker Patent- und Rechtsanwälte PartG mbB
(86) International application number: PCT/JP2024/014288
(87) International publication number: WO 2024/214676

(57) **Abstract**

To perform processing in which an influence between a plurality of production facilities is appropriately reflected. An information processing device includes a processing unit configured to: acquire process data for determining an operation stage of a production facility from each of a plurality of production facilities on an upstream side connected by a pipe; determine the operation stage for each of the plurality of production facilities on the upstream side based on the acquired process data; and perform, by using a combination of the operation stages of the plurality of production facilities on the upstream side, at least one of predicting a state of a predetermined substance flowing into a production facility on a downstream side, or a predetermined reaction intermediate, product, or emission generated in the production facility on the downstream side, or predicting a cause of an irregularity generated in any of the plurality of upstream production facilities and the downstream production facility.

## Description

### Technical Field

The present disclosure relates to an information processing device that processes process data, a process data processing method, and a program.

### Background Art

In the related art, an operating condition optimization system for a plant has been proposed (Patent Document 1). A measurement data recording unit in the present system records, in a measurement DB, operation state data acquired by an operation state data acquisition unit and operation index data obtained by the operation index data acquisition unit as a series of measurement data associated with each other based on a predetermined item. In addition, a regression model creation unit creates a regression model by performing a predetermined multivariate analysis with an operation state variable representing an operation state data side as an explanatory variable and an operation index variable representing an operation index data side as an objective variable. An operation index variable optimization unit obtains an operation state variable that optimizes the operation index variable based on the regression model.

### Citation List

### Patent Document

Patent Document 1: JP 2012-74007 A

### Summary of Invention

### Technical Problem

For example, between a plurality of production facilities connected by a pipe, the causal relationship of their influence is complicated, and it is not easy to associate the process data. Therefore, an object of the present disclosure is to provide a technique for performing a process in which the influence between a plurality of production facilities is appropriately reflected.

### Solution to Problem

### Aspect 1

An information processing device according to the present disclosure includes a processing unit configured to: acquire process data for determining an operation stage of a production facility from each of a plurality of production facilities on an upstream side connected by a pipe; determine the operation stage for each of the plurality of production facilities on the upstream side based on the acquired process data; and perform, by using a combination of the operation stages of the plurality of production facilities on the upstream side, at least one of predicting a state of a predetermined substance flowing into a production facility on a downstream side, or a predetermined reaction intermediate, product, or emission generated in the production facility on the downstream side, or predicting a cause of an irregularity generated in any of the plurality of production facilities on the upstream side and the production facility on the downstream side.

### Aspect 2

In Aspect 1, the operation stages may be classified into at least starting, operating, ending, and stoppage.

### Aspect 3

In Aspect 2, each of the operation stages may be determined by using a correspondence relationship between the operation stage and a feature of a combination of values of the process data output by a plurality of sensors, the correspondence relationship being predetermined for each of the plurality of production facilities on the upstream side.

### Aspect 4

In any one of the above-described Aspects 1 to 3, the predicting of the state and the predicting of the cause may be executed using a regression model that uses predetermined sensing data as an explanatory variable, the explanatory variable including a plurality of explanatory variables being different depending on the operation stage.

### Aspect 5

In any one of Aspects 1 to 4, the plurality of production facilities on the upstream side may include a plurality of series of production facilities connected in parallel.

### Aspect 6

In any one of Aspects 1 to 5, the production facility is a plant, each of the plurality of production facilities on the upstream side includes a manufacturing plant, and the production facility on the downstream side is a recovery plant configured to recover a predetermined component from a waste liquid or wastewater discharged from the manufacturing plant, and the processing unit may be configured to predict a concentration or an amount of a predetermined component contained in the waste liquid or the wastewater flowing into the recovery plant based on the combination of the operation stages of the plurality of production facilities on the upstream side.

### Aspect 7

In Aspect 6, the processing unit may be configured to determine an operation schedule of at least one of the plurality of production facilities on the upstream side or the recovery plant based on the predicted concentration or amount of the predetermined component flowing into the recovery plant.

Note that the content of the means for solving the problem can be provided as an apparatus such as a computer, a system including a plurality of apparatuses, a method executed by a computer, or a program to be executed by a computer. Note that a recording medium for storing the program may be provided.

### Advantageous Effects of Invention

According to the disclosed technique, it is possible to provide a technique for performing a process in which an influence between a plurality of production facilities is appropriately reflected.

### Brief Description of Drawings

FIG. 1 is a diagram illustrating an example of a system.
FIG. 2 is a block diagram illustrating an example of a configuration of an information processing device.
FIG. 3 is a diagram illustrating an example of a configuration of a plurality of plants.
FIG. 4 is a schematic diagram illustrating an example of a process performed by equipment included in a plant.
FIG. 5 is a diagram for explaining an example of process data in a batch stage.
FIG. 6 is a diagram for explaining an example of process data in a continuous stage.
FIG. 7 is a diagram for explaining an example of an operation stage (step).
FIG. 8 is a diagram for explaining a determination condition for specifying the operation stage (step).
FIG. 9 is a diagram illustrating an example of analyzing an average flow rate at a predetermined position in association with a step.
FIG. 10 is a process flowchart illustrating an example of processing executed by the information processing device.
FIG. 11 is a diagram for explaining a change of schedule.
FIG. 12 is a diagram for explaining an example of explanatory variables of a regression model.
FIG. 13 is a diagram for explaining an example of the regression model.

### Description of Embodiments

Hereinafter, an embodiment of a prediction apparatus is described with reference to the drawings.

### Embodiment

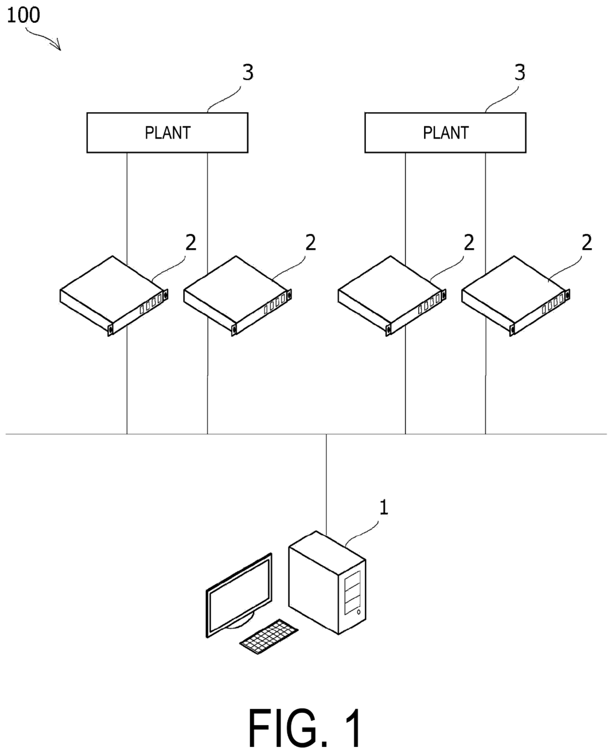

FIG. 1 is a diagram illustrating an example of a system according to the present embodiment. A system 100 includes an information processing device 1, a control station 2, and a plant 3. The system 100 is, for example, a Distributed Control System (DCS) and includes a plurality of control stations 2. That is, a control system of the plant 3 is divided into a plurality of sections, and distributed control is performed by the control stations 2 for each of the control sections. The control station 2 is an existing facility in the DCS, receives state signals output from sensors or the like included in the plant 3, or outputs a control signal to the plant 3. Based on the control signal, actuators such as valves and other equipment included in the plant 3 are controlled. Further, the system 100 includes a plurality of the plants 3. The plant 3 is, for example, a chemical plant, and is a production facility for achieving a certain purpose by a series of chemical processes, such as a production plant for producing a product or a recovery plant for recovering a raw material, a solvent, or a predetermined component such as a solvent. Further, the plant 3 may be a facility capable of producing two or more products (that is, performing campaign production).

The information processing device 1 acquires a state signal (process data) of the plant 3 via the control station 2. The process data includes a temperature, a pressure, a flow rate, and the like of a processing target such as a raw material, an intermediate, a product, a waste liquid, or wastewater, a setting value for determining an operating condition of equipment included in the plant 3, and the like. Then, the information processing device 1 classifies the operation state of each plant 3 into one of a plurality of predetermined stages based on at least some of the acquired process data. In addition, the information processing device 1 determines an operation schedule of the entire plurality of plants 3, predicts a state of a processing target, a product (a product, an intermediate, or the like), or an emission (a waste liquid, wastewater, or the like), or predicts a cause of an irregularity in any of the plants 3 by using a combination of operation stages of the plurality of plants 3. It should be noted that the irregularity refers to a change that deviates from a possible range of process data expected in a general operation of the plant 3 and a change that is a precursor thereof. The prediction can be performed using, for example, a regression model created in advance.

### Device Configuration

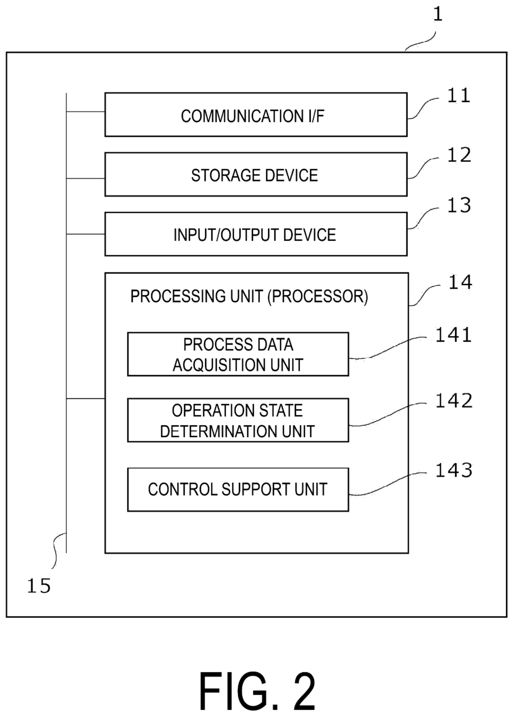

FIG. 2 is a block diagram illustrating an example of a configuration of the information processing device 1. The information processing device 1 is a computer and includes a communication interface (I/F) 11, a storage device 12, an input/output device 13, and a processing unit (processor) 14. The communication I/F 11 may be, for example, a network card or a communication module and communicates with another computer based on a predetermined protocol. The storage device 12 may be a main storage device such as a Random Access Memory (RAM) or a Read Only Memory (ROM), and an auxiliary storage device (secondary storage device) such as a Hard-Disk Drive (HDD), a Solid State Drive (SSD), and a flash memory. The main storage device temporarily stores a program to be read by the processor 14 and information transmitted to and received from other computers and secures a work area of the processor 14. The auxiliary storage device stores a program to be executed by the processor 14 and information and the like transmitted to and received from other computers. The input/output device 13 is a user interface, which is, for example, an input device such as a keyboard and a mouse, an output device such as a monitor, an input/output device such as a touch panel, or the like. The processor 14 is an arithmetic processing device such as a Central Processing Unit (CPU) and performs each processing according to the present embodiment by executing the program. In the example in FIG. 2, functional blocks are illustrated in the processor 14. That is, the processor 14 functions as a process data acquisition unit 141, an operation state determination unit 142, and a control support unit 143 by executing a predetermined program.

The process data acquisition unit 141 acquires process data from the sensors included in the plant 3 via the communication I/F 11 and the control station 2 and stores the process data in the storage device 12. The process data is associated with the sensor by a tag described later. The operation state determination unit 142 classifies the operation state of each plant 3 into any one of a plurality of predetermined stages based on at least some of the acquired process data. In addition, the control support unit 143 determines an operation schedule of the entire plurality of plants 3, predicts a state of a product (a product, an intermediate, or the like) or an emission (a waste liquid, wastewater, or the like), or predicts a cause of an irregularity in any one of the plants 3 based on the operation stage of each plant 3.

The above-described components are connected via a bus 15.

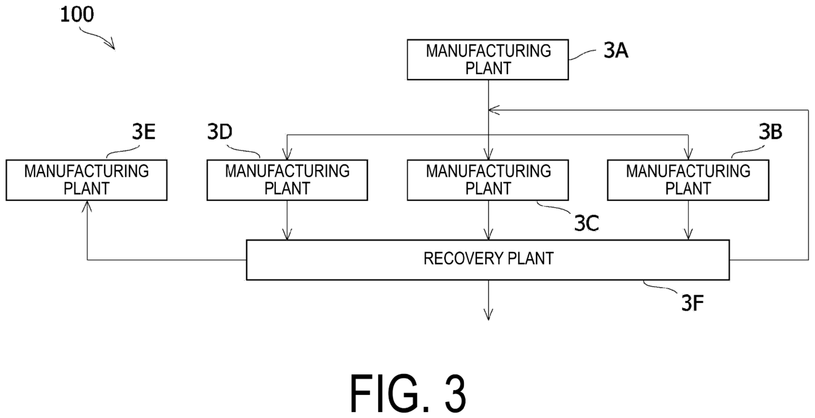

FIG. 3 is a diagram illustrating an example of a configuration of the plurality of plants 3. The plurality of plants 3 according to the present embodiment are connected to each other by pipes (indicated by arrows). In the example in FIG. 3, the system 100 includes a manufacturing plant 3A to a manufacturing plant 3E and a recovery plant 3F. The product of the manufacturing plant 3A is introduced from the plant 3B into the plant 3D. In addition, emissions of the plant 3B from the plant 3D are introduced into the recovery plant 3F. Note that the flow rate (volume flow rate or mass flow rate) per unit time of the object to be processed introduced from a previous stage to a subsequent stage is also referred to as a "charged amount". In the present embodiment, it is assumed that the same solvents are recovered in the plant 3F from waste liquids or wastewater discharged from the plants 3B, 3C, and a 3D in which different manufacturing processes are executed. In addition, for example, the components recovered in the recovery plant 3F are used in the plant 3E from the plant 3B, and other waste liquid or wastewater is discharged from the recovery plant 3F.

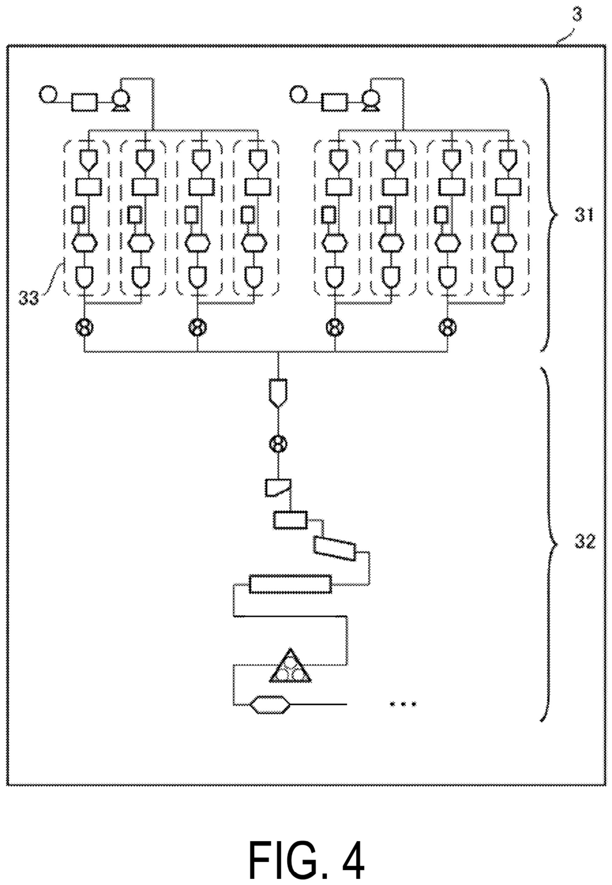

In addition, each of the plants 3 (for example, from the plant 3A to the plant 3F) outputs a plurality of process datasets. FIG. 4 is a schematic diagram illustrating an example of a process performed by equipment included in the plant 3. In the present embodiment, the process can include a batch stage 31 and a continuous stage 32. In the batch stage 31, processing targets are sequentially processed on a transaction-to-transaction basis by using a predetermined transaction, and, for example, processing operations such as receiving, holding, and emitting of a raw material with respect to each equipment are performed in order. In the continuous stage 32, the processing target stored in a buffer tank or the like is continuously treated, and, for example, treatments such as receiving, holding, and discharging of the raw material are performed in parallel. Furthermore, the process can include a plurality of sequences 33 that perform the same processing in parallel.

The equipment for performing each processing includes, for example, a reactor, a distillation device, a heat exchanger, a compressor, a pump, a tank, and the like, and these are connected via pipes. Furthermore, sensors, valves, and the like are provided at predetermined positions of the equipment and the pipes. The sensor can include a thermometer, a flow meter, a pressure gauge, a level meter, a densitometer, and the like. Furthermore, the sensor monitors the operation state of each equipment and outputs a state signal. Furthermore, it is assumed that the sensor included in the plant 3 is attached with a "tag", which is identification information for identifying each of the sensors. Then, the information processing device 1 and the control station 2 manage an input/output signal to each equipment based on the tag.

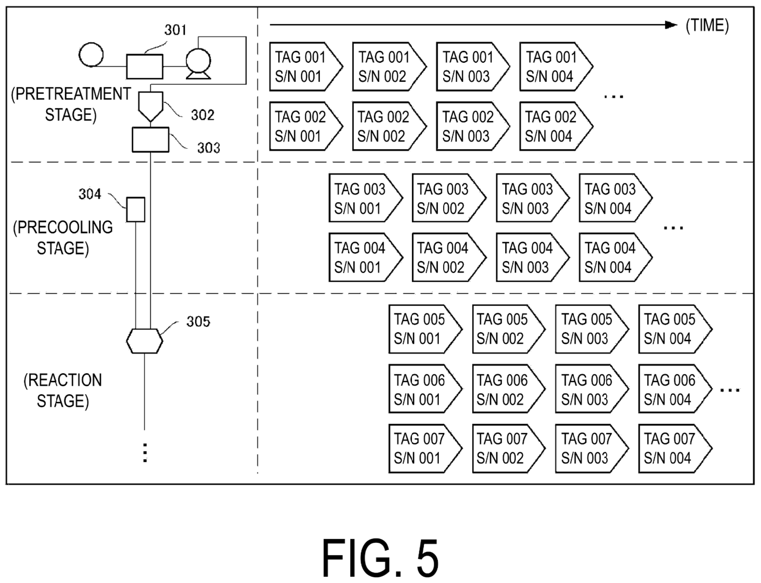

FIG. 5 is a diagram for explaining an example of process data in a batch stage. The left column in FIG. 5 illustrates a part of the process of the batch stage 31 illustrated in FIG. 4. Specifically, the plant 3 includes a shredder 301, a cyclone 302, a pretreatment 303, a precooler 304, and a reactor 305. Furthermore, the processes are classified into a pretreatment stage, a precooling stage, and a reaction stage. The right column in FIG. 5 illustrates an example of process data acquired in each process. In the pretreatment stage, pieces of time-series data are acquired from sensors with tags 001 and 002. In the precooling stage, pieces of time-series data are acquired from sensors with tags 003 and 004. In the reaction stage, pieces of time-series data are acquired from sensors with tags 005, 006, and 007. Furthermore, in the batch stage, a processing target associated with a production serial number (also referred to as "S/N") is intermittently processed. That is, the production serial number is identification information for identifying each of the processing targets to be collectively processed in the batch stage. As illustrated in FIG. 5, as time passes, time-series data associated with the processing target associated with the subsequent production serial number is obtained.

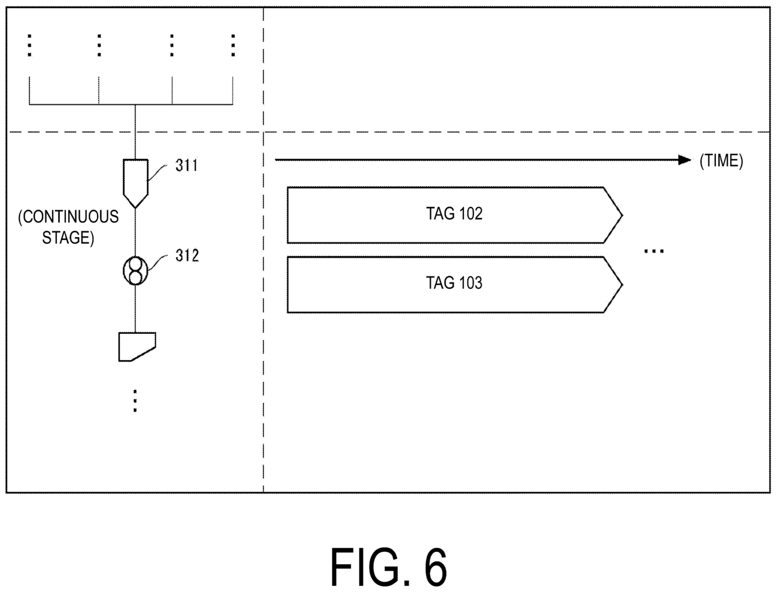

FIG. 6 is a diagram for explaining an example of process data in the continuous stage. The left-hand column in FIG. 6 illustrates a part of the process of the continuous stage 32 illustrated in FIG. 4. Specifically, the plant 3 includes a tank 311 and a pump 312. The right column in FIG. 6 indicates an example of process data acquired in each process. In the continuous stage 32, time-series data associated with the tag and not associated with the production serial number is continuously acquired from sensors. In the example in FIG. 6, time-series data is acquired from the respective sensors whose tags are 102 and 103. In the continuous stage, the equipment continuously receives a processing target and continuously performs processing. In a case where the batch stage and the continuous stage are continuously performed, a processing target in the batch stage and a processing target in the continuous stage may be associated with each other. For example, the production serial number in the batch stage and the process data in the continuous stage are associated with each other based on the sampling interval of the sensor and the time during which the processing target stays between the batch stage and the continuous stage.

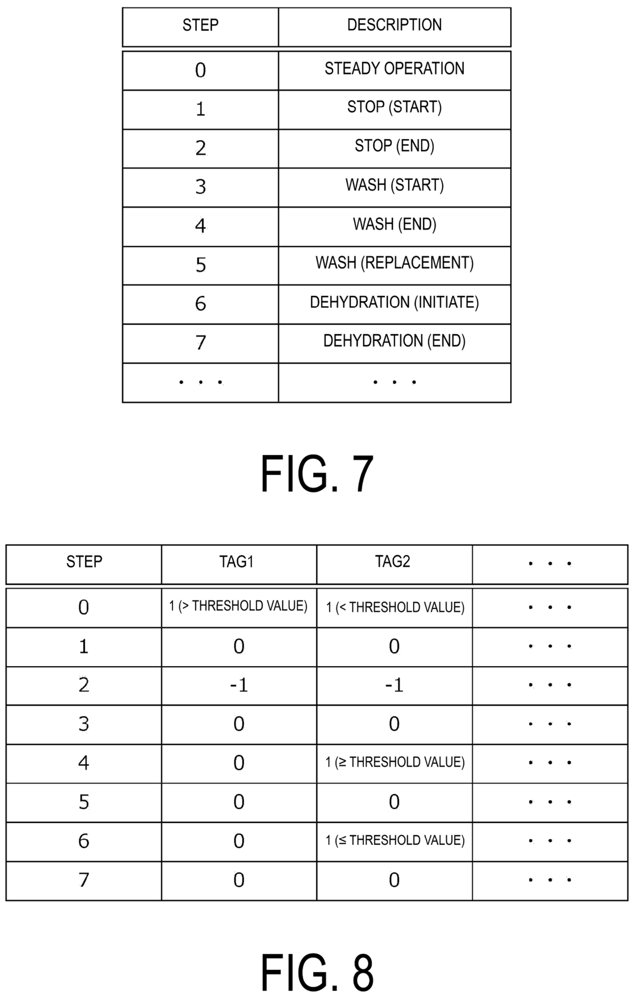

The information processing device 1 specifies the operation stage of the plant 3 based on one or more pieces of process data output by one plant 3. The operation stage is information indicating an operation state of the plant 3, and a plurality of stages are defined in advance. For example, the operation stage includes at least "starting process (start-up)", "operating", "ending process (shut-down)", and "stopped". In addition, the operation stage may include "during cleaning", "stop cleaning", "during dehydration", "stop dehydration", "during cleaning liquid replacement", "completion of replacement", and the like. FIG. 7 is a diagram for explaining an example of an operation stage. The table in FIG. 7 includes columns "step" and "description". In the column "step", a label (for example, identification information such as a serial number) for uniquely specifying the stage of the process is displayed. In the column "explanation", an explanation of each stage is displayed. Such an operation stage may be defined for each product manufactured by the plant 3. That is, in a plant that performs campaign production, a plurality of sets of operation stages are defined by the number of products.

FIG. 8 is a diagram for explaining a determination condition for specifying an operation stage. The table in FIG. 8 includes a plurality of rows indicating each of the stages (also referred to as "steps") of operation. Further, in the table in FIG. 8, a column indicating a plurality of tags used for determination is associated with a label indicating a step. For each tag, a value of "1", "0", or "- 1" is displayed. "1" indicates a significant value (for example, a value exceeding a threshold value determined for each tag) in determining whether or not the step corresponds to each column. It is assumed that the threshold value is predetermined. In FIG. 8, the threshold is illustrated in parentheses. "0" indicates zero or near zero (e.g., not exceeding a predetermined threshold close to zero). "-1" indicates that the tag does not contribute to the determination of whether or not the step corresponds to each row. Based on such a determination condition, the information processing device 1 can specify a step having a feature matching a combination of process data output by the plant 3. That is, based on the acquired process data, a step in which the process data corresponding to the tag to which the value "1" is set exceeds a predetermined threshold value and the process data corresponding to the tag to which the value "0" is set is zero or substantially zero is specified. Note that the information processing device 1 may specify a step by using a definition of an order of steps to which a transition may be made, in addition to the information as illustrated in FIG. 8. That is, in a case where the step at the time of processing is known, it is determined whether or not the process data indicates a feature of a step to which transition can be made from the step. For example, in a case where it is known that the step at the start time point is "0", when the feature of the process data of the step "1" to which transition can be made is detected, it is determined that the transition to the step "1" is made. Similarly, after the step at the time of processing is specified as "1", it is determined that the process has transitioned to the step "2" in a case where the feature of the process data of the step "2" to which transition can be made is detected. On the other hand, if the determination can be made without using the step at the time of processing, the process of determining the operation stage can be started even from an irregular state.

In addition, the information processing device 1 determines which state of the above-described steps each of the plurality of plants 3 is in, and performs a process using a combination of steps indicating the states of the plurality of plants 3. For example, the state of a predetermined substance flowing into the plant 3 on the downstream side or a predetermined reaction intermediate, product, or emission generated in the plant 3 on the downstream side may be predicted. In addition, the cause of the irregularity occurring in any of the plurality of plants 3 on the upstream side and the plant 3 on the downstream side may be predicted. In the present embodiment, processing may be performed using a feature amount such as a statistical amount based on steps, in addition to the combination of steps.

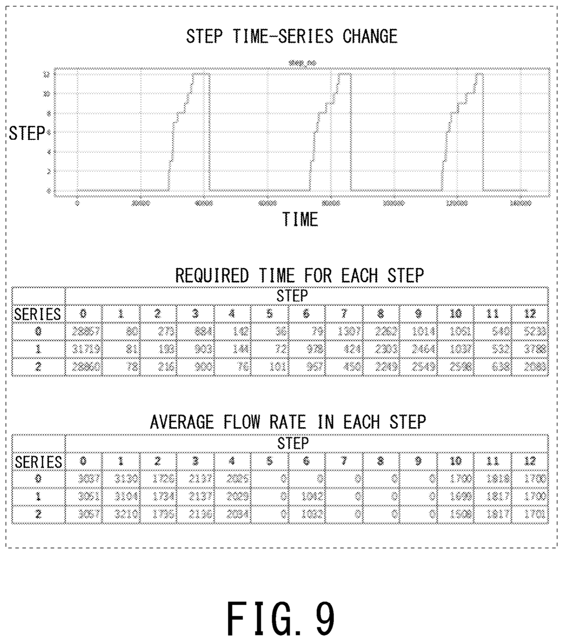

FIG. 9 is a diagram illustrating an example in which an average flow rate at a predetermined position in a pipe is analyzed in advance in association with a step. In the example in FIG. 9, the required time of each step and the average flow rate in each step are stored in a table in advance by analyzing the past operation results. In addition, it is possible to create a regression model using various values such as the required time according to the operation stage of the plant 3 and the flow rate of the processing target as explanatory variables. By performing analysis in advance, statistics such as a feature amount representing a step itself such as the length of the period (FIG. 9: time required for each step) and a representative value that can be calculated for each step such as an average flow rate in the period (FIG. 9: average flow rate in each step) can be used as explanatory variables.

The information processing device 1 can perform various processes based on a combination pattern of steps indicating the states of the plurality of plants 3. The information processing device 1 specifies a step of an upstream stage and predicts a downstream stage by, for example, a regression model created in advance using an explanatory variable corresponding to the step. For example, the concentration of a predetermined component in a waste liquid or wastewater discharged to a downstream plant can be predicted, or the temperature in a downstream reactor can be predicted. Further, the plant 3 may be controlled according to the prediction result. For example, in accordance with a combination of the states of the manufacturing plants 3B, 3C, and 3D illustrated in FIG. 3, the information processing device 1 may perform scheduling by advancing or delaying the transition to the subsequent step for at least one of the manufacturing plants 3B, 3C, or 3D. Specifically, scheduling can be performed to reduce the bias of the load in the downstream stage. In addition, for example, the information processing device 1 may change the operating condition of the recovery plant 3F according to a combination of the states of the manufacturing plants 3B, 3C, and 3D illustrated in FIG. 3. To be specific, the operating conditions suitable for the recovery plant 3F to recover the components such as solvents are determined according to the charged amount of the recovery plant 3F and the concentration of the processing target predicted based on the combination of the steps of the upstream stage.

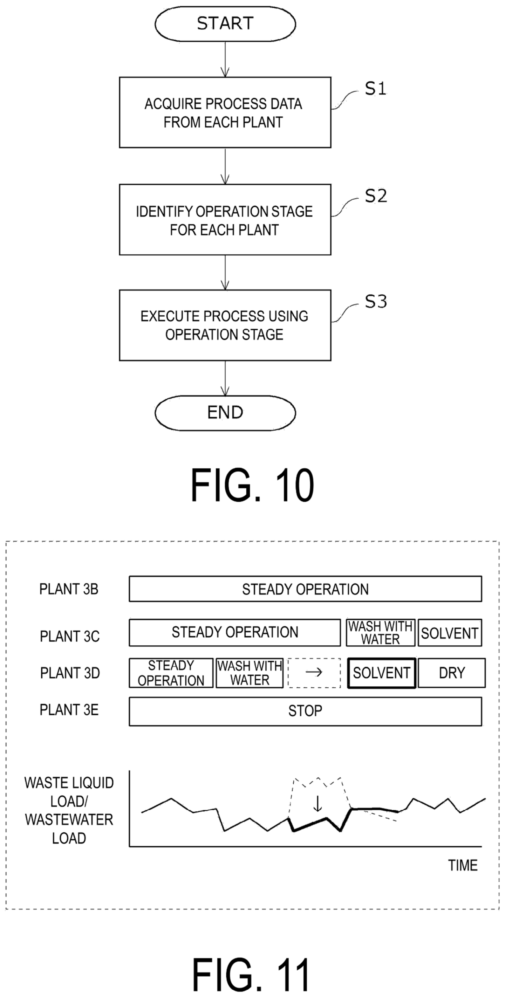

FIG. 10 is a process flowchart illustrating an example of processing executed by the information processing device 1. The process data acquisition unit 141 of the information processing device 1 acquires predetermined process data from each plant 3 (FIG. 10: S1). For example, a tag that is identification information of a sensor or the like and a measurement value associated with the tag are read. It is assumed that the process data is continuously output from the plant 3 and accumulated in the storage device 12 of the information processing device 1 as illustrated in FIGS. 5 and 6.

In addition, the operation state determination unit 142 specifies a stage (step) of the operation of each plant 3 based on a predetermined process data value (FIG. 10: S2). The operation state determination unit 142 specifies a step corresponding to a pattern of values of a plurality of predetermined tags based on a determination condition as illustrated in FIG. 8, for example.

Then, the control support unit 143 performs a predetermined process based on a combination of steps corresponding to the plurality of plants 3 (FIG. 10: S3). For example, the control support unit 143 may predict a state of a product or an emission of any plant 3 based on a pattern of a combination of steps of a plurality of plants 3. As illustrated in FIG. 3, in a case where the waste liquid is transferred from the plurality of manufacturing plants 3B to 3D to the buffer tank of the recovery plant 3F and treated, the flow rate of the waste liquid discharged from the manufacturing plants 3B to 3D may be specified according to the steps of the manufacturing plants 3B to 3D, and the amount of the processing target flowing into the recovery plant 3F in the future may be predicted. In this way, it is possible to predict the scale of equipment necessary for receiving the processing target in the downstream stage. Similarly, the concentration or amount (in other words, "quality") of a predetermined component may be predicted instead of the flow rate. In this way, the future load of the recovery plant 3F can be predicted. Without being limited to such an example, a state of a substance flowing into the plant 3 on the downstream side may be predicted using a combination of steps of the plurality of plants 3 on the upstream side, or a state of a reaction intermediate, a product, or an emission generated in the plant 3 on the downstream side may be predicted.

In addition, the control support unit 143 may determine an operation schedule of the plurality of plants 3 based on a combination pattern of steps of the plurality of plants 3. Based on the concentration or amount of the predetermined substance (that is, the load in the recovery process) predicted as described above, the operation schedule of the plurality of plants 3 can be adjusted to level the load. For example, FIG. 11 is a diagram for explaining a change of schedule. In the example in FIG. 11, the load is reduced by changing the timing of cleaning with the solvents in the plant 3D. That is, by changing the operation timing to equalize the load while securing the production amount required by the predetermined deadline in the plurality of manufacturing plants 3B to 3E, the recovery efficiencies of the predetermined raw material components can be improved in the recovery plant 3F. Similarly, it is easy to avoid concentration of load such as overflow of the buffer tank of the recovery plant 3F. In addition, it also becomes easy to perform leveling for a long period of time as a target, the long period of time spanning the working hours of the plant operator. The determination of the schedule may be performed using existing scheduling algorithms.

The leveling as described above is also useful in the case of increasing the production of products in the plant 3. For example, when the recovery plant 3F is debottlenecked in preparation for the maximum load by the manufacturing plant 3A from the manufacturing plant 3E in FIG. 3, the scale of the facility and the repair cost tend to increase. If the excess or deficiency of the facility capacity is evaluated based on the above-described leveling, it is possible to perform plant design based on the minimum necessary load. That is, schedule in which the production amount after the increase can be manufactured may be created, and debottlenecking may be performed to withstand the maximum load in the schedule.

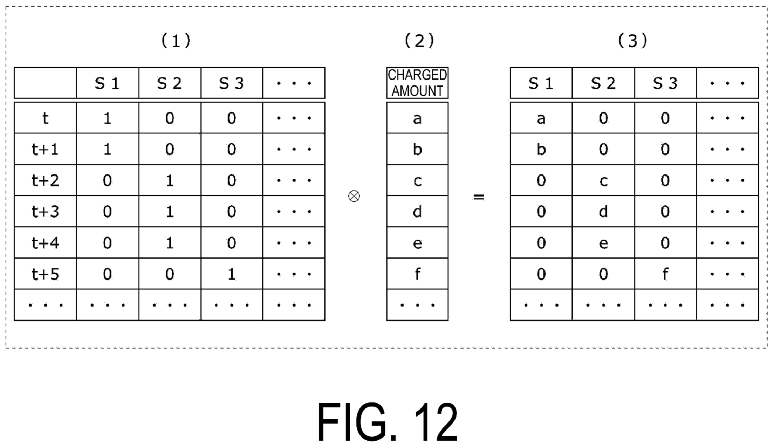

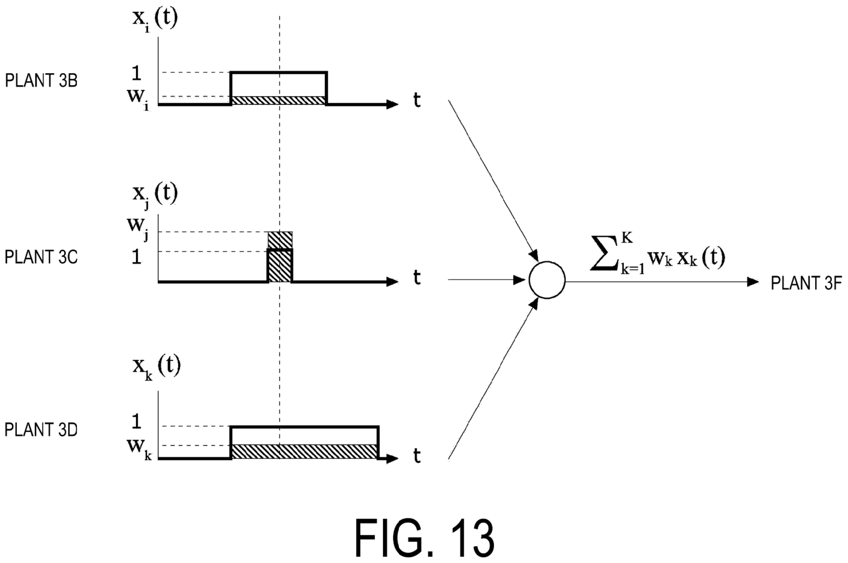

In addition, the control support unit 143 may create a regression model for predicting the process data of the plant 3 on the downstream side by an explanatory variable using the steps of the plurality of plants 3 on the upstream side. FIG. 12 is a diagram for explaining an example of explanatory variables of a regression model. FIG. 12 (1) is a table in which a step specified based on a plurality of pieces of process data at a predetermined time point in one plant 3 is represented by a One-hot expression. FIG. 12 (2) is a table illustrating the measured charged amount (flow rate per unit time) from the plant 3 to the plant on the downstream side at a predetermined time point. FIG. 12 (3) is a table illustrating explanatory variables of the regression analysis. The explanatory variable is the product of the step represented by the One-hot expression and the charged amount. That is, for example, the process data output by one sensor such as the value of the charged amount is used as an explanatory variable that varies depending on the operation state (specified step) of the plant on the upstream side. FIG. 13 is a diagram for explaining an example of the regression model. The regression model uses, for example, the amount of a predetermined substance flowing into the downstream plant 3 as an objective variable. The graph on the left side of FIG. 13 schematically illustrates a step specified at a certain point in time from the plant 3B to the plant 3D, the flow amount x(t) of the waste liquid or the wastewater discharged in the step, and the concentration w of the predetermined substance contained therein. Here, for example, only the specified step among the plurality of step candidates illustrated in FIG. 12 is illustrated. The equation illustrated on the right side of FIG. 13 represents the amount of a predetermined substance flowing into the downstream plant 3F. Then, the parameter of the concentration w is determined by, for example, regression analysis. For example, by using the operation state of the plant on the upstream side in this manner, the prediction accuracy of the regression model can be improved. Note that, when the above-described predetermined substance is a recovery target in the recovery plant 3F, it is possible to predict processing impossibility in the recovery plant 3F by the regression model. In addition, when the predetermined substance is a causative substance of a temperature decrease in a subsequent process, a temperature change in the subsequent process can be predicted by the regression model.

Further, the control support unit 143 may predict the cause of the irregularity occurring in any of the plurality of plants 3 based on the pattern of the combination of the steps of the plurality of plants 3. For example, the relationship between the irregularity whose cause is known and the explanatory variable corresponding to the step of the plurality of plants 3 when the irregularity occurs is machine-learned using the histories of the operations of the plurality of plants 3. A method of the machine learning is not limited to the regression analysis, and various types of supervised learning using a cause of the irregularity as a teacher value can be used. Then, when any irregularity occurs, the control support unit 143 specifies a candidate of the cause of the irregularity based on the pattern of the combination of the steps of the plurality of plants 3 at the time point.

Then, the information processing device 1 ends the process in FIG. 10. As described above, by performing the process based on the pattern of the combination of the steps of the plurality of plants 3, it is possible to provide a technique for performing the process reflecting the influence between the plurality of plants. For example, in the system 100 including a plurality of plants 3 using a common solvent and capable of producing products by switching the products to be manufactured in each plant 3, there are a relatively large number of combinations of operation stages (steps) of the plants 3. Even in such a case, by using the combination pattern of the steps, it is possible to perform the process in consideration of the influence between the plurality of plants. It should be noted that if it is attempted to classify the processing based on the combination of the process data obtained from the plurality of plants 3, the number of patterns becomes enormous and the feasibility of a generalpurpose system is low. In the present embodiment, many pieces of process data are dimensionally reduced to a combination pattern of operation stages of the plant 3 determined in advance, and the state of the entire system 100 is evaluated, thereby a practical process can be performed.

### Modified Examples

Each of the configurations, combinations thereof, and the like in each of the embodiments is an example, and various additions, omissions, substitutions, and other changes of the configurations may be made as appropriate without departing from the spirit of the present disclosure. The present disclosure is not limited by the embodiments and is limited only by the claims. Each embodiment disclosed in the present specification can be combined with any other feature disclosed herein.

The configuration of the system 100 illustrated in FIG. 3 is an example, and the present disclosure is not limited to an aspect including the recovery plant 3F. For example, in a case where a plurality of plants are located on the upstream side and a manufacturing plant or the like affected by the operation states of the plants is located on the downstream side, it is useful to perform processing according to a combination of operation stages of the plurality of plants on the upstream side for supporting the control of the plants on the downstream side. In addition, the above-described processing may be performed using process data acquired from a plurality of series of the upstream production facilities included in one plant 3 instead of the plurality of plants 3. That is, an operation stage (step) is determined using the process data acquired from the plurality of series of the production facilities on the upstream side, and at least one of predicting a state of a predetermined substance flowing into the production facility on the downstream side, or a predetermined reaction intermediate, product, or emission generated in the production facility on the downstream side, or predicting a cause of an irregularity generated in any of the plurality of series of the production facilities on the upstream side and the production facility on the downstream side is executed using the determined operation stage.

In addition, at least some of the functions of the information processing device 1 may be realized by being distributed to a plurality of devices, or the same function may be provided by a plurality of devices in parallel. At least some of the functions of the information processing device 1 may be provided on a so-called cloud.

Furthermore, the present disclosure includes a method and a computer program for performing the aforementioned processing, and a computer readable recording medium storing the program. The recording medium on which the program is stored enables the aforementioned processing by causing a computer to execute the program.

The computer readable recording medium refers to a recording medium that can accumulate information such as data or programs by electrical, magnetic, optical, mechanical, or chemical actions and can be read from a computer. Among such recording media, examples of recording media detachable from a computer include flexible disks, magneto-optical disks, optical disks, magnetic tapes, memory cards, and the like. Furthermore, as recording media fixed to a computer, there are HDD, Solid State Drive (SSD), ROM, and the like.

### Reference Signs List

100: System
1: Information processing device
2: Control station
3 (3A-3F): Plant
11: Communication I/F
12: Storage device
13: Input/output device
14: Processing unit (processor)
141: Process data acquisition unit
142: Operation state determination unit
143: Control support unit

## Claims

1. An information processing device comprising:
a processing unit configured to,
acquire process data for determining an operation stage of a production facility from each of a plurality of production facilities on an upstream side connected by a pipe,
determine the operation stage for each of the plurality of production facilities on the upstream side based on the acquired process data, and
perform, by using a combination of the operation stages of the plurality of production facilities on the upstream side, at least one of predicting a state of a predetermined substance flowing into a production facility on a downstream side, or a predetermined reaction intermediate, product, or emission generated in the production facility on the downstream side, or predicting a cause of an irregularity generated in any of the plurality of production facilities on the upstream side and the production facility on the downstream side.

2. The information processing device according to claim 1, wherein
the operation stages are classified into at least starting, operating, ending, and stoppage.

3. The information processing device according to claim 2, wherein
each of the operation stages is determined by using a correspondence relationship between the operation stage and a feature of a combination of values of the process data output by a plurality of sensors, the correspondence relationship being predetermined for each of the plurality of production facilities on the upstream side.

4. The information processing device according to any one of claims 1 to 3, wherein
the predicting of the state and the predicting of the cause are executed using a regression model that uses predetermined sensing data as an explanatory variable, the explanatory variable including a plurality of variables being different depending on the operation stage.

5. The information processing device according to any one of claims 1 to 4, wherein
the plurality of production facilities on the upstream side include a plurality of series of production facilities connected in parallel.

6. The information processing device according to any one of claims 1 to 5, wherein
the production facility is a plant,
each of the plurality of production facilities on the upstream side includes a manufacturing plant,
the production facility on the downstream side is a recovery plant configured to recover a predetermined component from a waste liquid or wastewater discharged from the manufacturing plant, and
the processing unit predicts a concentration or an amount of a predetermined component contained in the waste liquid or the wastewater flowing into the recovery plant based on the combination of the operation stages of the plurality of production facilities on the upstream side.

7. The information processing device according to claim 6, wherein
the processing unit determines an operation schedule of at least one of the plurality of production facilities on the upstream side or the recovery plant based on the predicted concentration or amount of the predetermined component flowing into the recovery plant.

8. A process data processing method executed by a computer, the process data processing method comprising:
acquiring process data for determining an operation stage of a production facility from each of a plurality of production facilities on an upstream side connected by a pipe;
determining the operation stage for each of the plurality of production facilities on the upstream side based on the acquired process data; and
performing, by using a combination of the operation stages of the plurality of production facilities on the upstream side, at least one of predicting a state of a predetermined substance flowing into a production facility on a downstream side, or a predetermined reaction intermediate, product, or emission generated in the production facility on the downstream side, or predicting a cause of an irregularity generated in any of the plurality of production facilities on the upstream side and the production facility on the downstream side.

9. A program for causing a computer to execute:
acquiring process data for determining an operation stage of a production facility from each of a plurality of production facilities on an upstream side connected by a pipe;
determining the operation stage for each of the plurality of production facilities on the upstream side based on the acquired process data; and
performing, by using a combination of the operation stages of the plurality of production facilities on the upstream side, at least one of predicting a state of a predetermined substance flowing into a production facility on a downstream side, or a predetermined reaction intermediate, product, or emission generated in the production facility on the downstream side, or predicting a cause of an irregularity generated in any of the plurality of production facilities on the upstream side and the production facility on the downstream side.
